# EUROPÄISCHE PATENTSCHRIFT

(11) **EP 0 698 308 B1**
(45) Veröffentlichungstag und Bekanntmachung des Hinweises auf die Patenterteilung: **23.09.1998**
(21) Anmeldenummer: 95910551.1
(22) Anmeldetag: 04.03.1995
(51) Int. Cl.: H02G 3/12, H02G 3/04

(54) **UNTERTEIL FÜR EINEN INSTALLATIONSKANAL**
LOWER PART FOR AN INSTALLATION DUCT
PARTIE INFERIEURE POUR CONDUIT D'INSTALLATION

(30) Priorität: 11.03.1994 DE 9404062 U
(43) Veröffentlichungstag der Anmeldung: 28.02.1996
(73) Patentinhaber: Albert Ackermann GmbH & Co. KG, 51643 Gummersbach (DE)
(72) Erfinder: FASTENROTH, Kurt-Helmut, D-51647 Gummersbach (DE)
(74) Vertreter: Wilhelm & Dauster Patentanwälte European Patent Attorneys
(86) Internationale Anmeldenummer: EP9500800
(87) Internationale Veröffentlichungsnummer: WO9524755

(56) Entgegenhaltungen:
- DE-A- 2 516 404
- DE-U- 8 704 502
- DE-U- 8 708 607

## Beschreibung

Die Erfindung betrifft ein Unterteil für einen Installationskanal, insbesondere einen Wandkanal, bestehend aus einem Blechprofil mit C-förmigem Querschnitt, an dem eine sich über die Länge des Blechprofiles erstreckende Montageschiene mit C-Profil zur Befestigung von Installationsgeräten an der Innenseite angebracht ist.

Installationskanäle mit Unterteilen dieser Art sind beispielsweise aus dem Gebrauchsmuster 87 04 502 oder aus dem Gebrauchsmuster 87 08 607 bekannt. In der Praxis werden dabei die dort vorgesehenen, am Boden der Kanäle angebrachten Montageschienen getrennt von dem rinnenförmigen Blechprofil angefertigt und dann am Boden des Kanales angeschweißt, angenietet, geklebt oder in anderer Weise befestigt. Zur Herstellung des Kanalprofiles werden daher mehrere Arbeitsgänge an getrennten Teilen notwendig, was aufwendig ist.

Der vorliegenden Erfindung liegt die Aufgabe zugrunde ein Unterteil für einen Installationskanal der eingangs genannten Art fertigungstechnisch günstiger auszubilden, um den Bearbeitungsaufwand einzuschränken.

Zur Lösung dieser Aufgabe besteht die Erfindung bei einem Unterteil der eingangs genannten Art darin, daß die Montageschiene aus paarweise gegenüberliegenden und abschnittsweise aus der Bodenwand des Blechprofiles herausgeschnittenen streifenförmigen Laschen besteht, die jeweils zu einem Schenkel des C-Profiles der Montageschiene umgeformt sind.

Durch diese Ausgestaltung entfällt die getrennte Herstellung der Montageschiene und auch der Befestigungsaufwand für dieselbe. Der Erfindung liegt dabei die Idee zugrunde, daß es für die Funktion der Montageschiene keine wesentliche Rolle spielt, ob die Montageschiene ununterbrochen durchlaufend ausgebildet ist oder ob sie aus abschnittsweise hintereinanderliegenden Teilbereichen aufgebaut ist, die gegeneinander noch durch Bodenteile des Wandkanales getrennt sind. Durch die neue Ausgestaltung wird es möglich, das Unterteil für den Installationskanal z.B. aus Blech in einem Arbeitsgang zu stanzen und die Montageschiene bei der Formung des Blechprofiles zur Kanalform mit anzuformen. Zusätzlicher Arbeitsaufwand für das Anbringen der Montageschiene wird überflüssig.

In Weiterbildung der Erfindung kann zwischen den Laschen jeweils ein quer zu den Längsseiten der Laschen verlaufender Verstärkungssteg vorgesehen sein, der den verbleibenden Bereich des Bodens des Unterteiles trotz der abschnittsweise ausgestanzten Laschen insgesamt steif genug hält. Dieser Verstärkungssteg kann dabei in einfacher Weise durch einen geraden Schnitt senkrecht zur Mittellängsachse des Profiles und durch eine hutzenartige Verformung des an den Schnitt angrenzenden Materialbereiches gebildet sein. Auch die Verstärkungsstege lassen sich so unmittelbar mit anformen und zwar durch verhältnismäßig einfache Stanz- und Preßvorgänge.

Dabei ist es sehr vorteilhaft aus Stabilitätsgründen, wenn der Verstärkungssteg nach beiden Seiten der Mittellängsachse der Montageschiene etwas länger ausgebildet ist als die im Boden ausgestanzten Öffnungen, aus denen die Laschen gebildet sind.

Die Erfindung ist anhand eines Ausführungsbeispieles in den Zeichnungen dargestellt, die im Folgenden beschrieben werden. Es zeigen:
- Fig. 1: eine Draufsicht auf die offene Seite eines Unterteiles für einen Wandinstallationskanal, von dem nur die beiden Endbereiche gezeigt sind.
- Fig. 2: die Ansicht des Wandkanales der Fig. 1 in einer verkleinerten Darstellung von der geschlossenen Unterseite her,
- Fig. 3: den Schnitt durch den Wandkanal der Fig. 1 längs der Linie III-III in Fig. 1,
- Fig. 4: die vergrößerte Darstellung des Details IV in Fig. 3, und
- Fig. 5: schließlich die vergrößerte Darstellung des Schnittes längs der Linie V-V in Fig. 1.

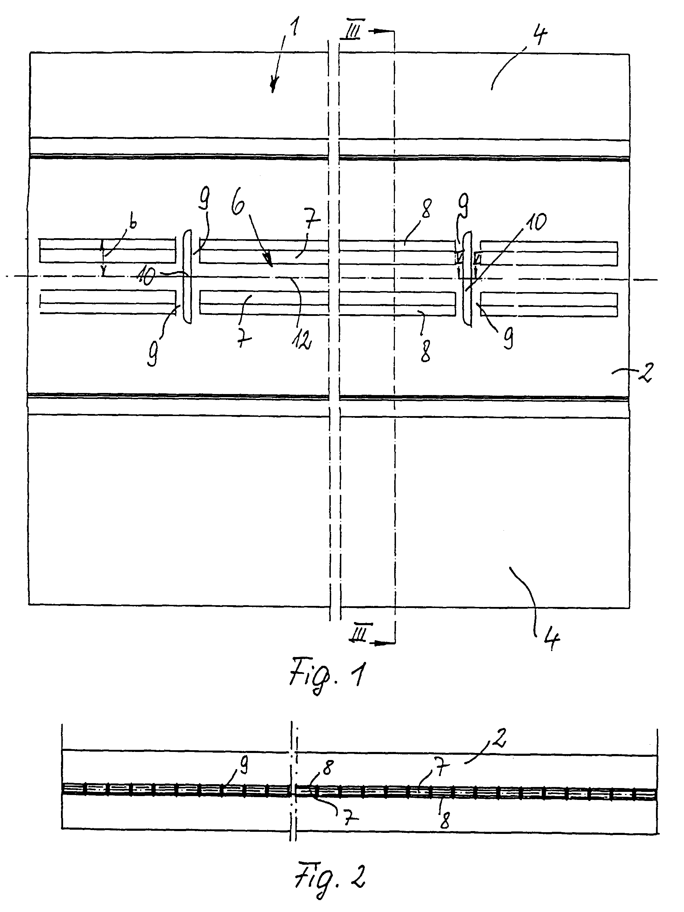

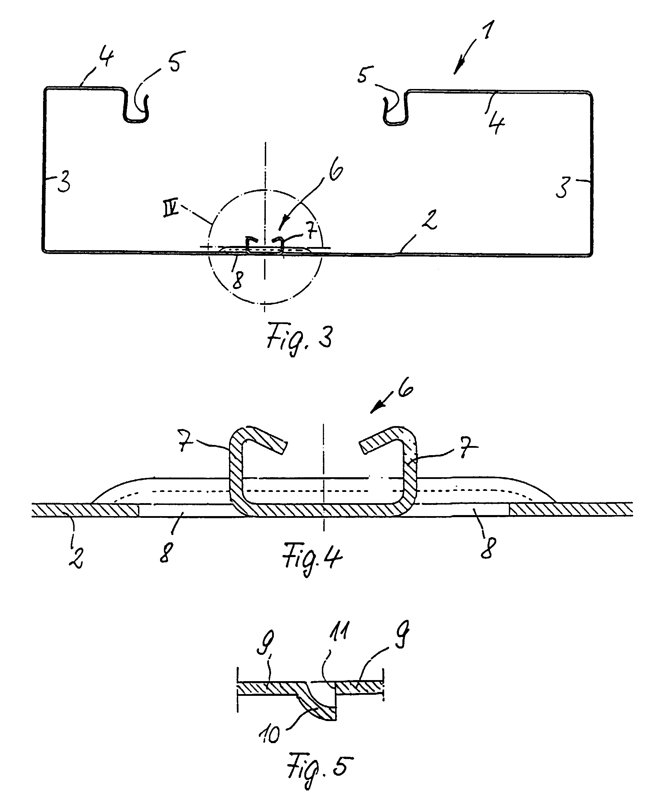

In den Fig. 1 bis 3 ist das Unterteil eines Wandinstallationskanales gezeigt, das aus einem Blechprofil (1) mit C-förmigem Querschnitt besteht, dessen Bodenwand (2) in zwei Seitenwände (3) übergeht, von denen aus wiederum parallel zur Bodenwand (2) Abschlußwandteile (4) verlaufen, die an ihren Endkanten mit Rinnen (5) zum Einsetzen eines nicht gezeigten Deckels versehen sind.

An der Innenseite der Bodenwand (2) ist eine parallel zu den Seitenwänden (3) verlaufende Montageschiene (6) angebracht, die dazu dient, Verankerungsteile von elektrischen Installationsgeräten aufzunehmen und zu halten. Diese Montageschiene (6) besteht dabei aus länglichen Laschen (7), die aus dem Material der Bodenwand (2) herausgeschnitten und mit ihren Rändern nach oben und innen umgebogen sind. Die Fig. 4, aber auch Fig. 1, läßt dabei die durch das Ausschneiden und Hochbiegen der Laschen (7) entstandenen rechteckigen Öffnungen (8) erkennen.

Die Fig. 1 und 2 machen ferner deutlich, daß die Laschen (7) nur abschnittsweise ausgeschnitten und geformt sind, und daß zwischen zwei in der Längsrichtung des Profiles (1) aufeinanderfolgenden Laschenpaaren jeweils Verbindungsstege (9) zwischen den beidseits der Öffnungen (8) verbleibenden Bodenteilen vorhanden sind, die die notwendige Stabilität des Profiles (1) sichern. Diese Verbindungsstege (9) sind dabei beim Ausführungsbeispiel noch mit einer zusätzlichen Verstärkung in Form einer Versteifungsripp (10) versehen, die dadurch gebildet wird, daß senkrecht zu den Längskanten der Laschen (7) und damit senkrecht auch zu den Längsrändern der Öffnungen (8) an der Stelle (11) ein Trennschnitt erfolgt (siehe Fig. 5), und daß der an diesen Schnitt angrenzende Materialbereich in der Art einer Hutze, die zum Schnitt (11) hin offen ist, nach oben zu der Verstärkungsrippe (10) aufgebogen ist. Der Verbindungssteg (9) geht dann fluchtend in den Boden (2) des Profiles (1) über. Durch diese Ausgestaltung wird eine Versteifung im Bereich der verbleibenden Verbindungsstege erreicht. Fig. 1 läßt dabei erkennen, daß die Länge der Versteifungsrippen (10), jeweils senkrecht von der Mittellängsachse (12) der Montageschiene (6) aus gemessen, etwas größer ist als die in der gleichen Richtung gemessene Breite (b) der Außenkanten der Öffnungen (8). Die Versteifungsstege (10) reichen daher bis in den Bereich des Bodens (2), der nicht durch Einschnitte geschwächt ist.

Wie ohne weiteres verständlich wird, läßt sich das neue Unterteil für einen Wandinstallationskanal in sehr einfacher Weise aus einem gemeinsamen Zuschnitt durch Stanzen, Kanten und Biegen sowie Drücken herstellen, wenn geeignete Werkzeuge vorgesehen werden. Das Profil kann daher ohne einen zusätzlichen Arbeitsvorgang aus einem Blechstreifen zur Endform umgeformt werden.

## Patentansprüche

1. Unterteil für einen Installationskanal, insbesondere einen Wandkanal bestehend aus einem Blechprofil (1) mit C-förmigen Querschnitt, an dem eine sich über die Länge des Profiles erstreckende Montageschiene (6) mit C-Profil zur Befestigung von Installationsgeräten an der Innenseite der Bodenwand (2) angebracht ist, gekennzeichnet dadurch, daß die Montageschiene (6) aus paarweise gegenüberliegenden und abschnittsweise aus der Bodenwand herausgeschnittenen streifenförmigen Laschen (7) besteht, die jeweils zu einem Schenkel des C-Profiles der Montageschiene (6) umgeformt sind.

2. Unterteil nach Anspruch 1, dadurch gekennzeichnet, daß zwischen den die Laschen (7) enthaltenden Abschnitten jeweils ein quer zu den Längsseiten der Laschen verlaufender Verbindungssteg (9) mit einer Verstärkung (10) vorgesehen ist.

3. Unterteil nach Anspruch 2, dadurch gekennzeichnet, daß die Verstärkung durch eine Verstärkungsrippe (10) gebildet wird, die aus einem geraden Schnitt (11) senkrecht zur Mittellängsachse (12) der Montageschiene (6) und durch eine hutzenartige Verformung des an den Schnitt 811) angrenzenden Materialbereiches gebildet ist.

4. Unterteil nach den Ansprüchen 1 bis 3, dadurch gekennzeichnet, daß die Verstärkungsrippe (10) nach beiden Seiten der Mittellängsachse (12) der Montageschiene (6) etwas länger ausgebildet ist als die Breite (b) der in der Bodenwand (2) ausgestanzten Öffnungen (8), aus denen das Material für die Laschen (7) stammt.

## Claims

1. An under-part for an installation channel, in particular a wall channel consisting of a sheet metal profile section (1) with a C-shaped cross section, attached to which is an assembly rail (6) with a C profile which extends along the length of the profile section for fastening installation devices to the inside of the floor (2), characterised in that the assembly rail (6) consists of pairs of opposing strip-shaped brackets (7) which are partially cut out of the floor and each of which is shaped to form a leg of the C section of the assembly rail (6),

2. An under-part in accordance with Claim 1, characterised in that between each of the sections containing the brackets (7) there is a connecting strut (9) which runs at right angles to the sides of the brackets with a reinforcement (10).

3. An under-part in accordance with Claim 2, characterised in that the reinforcement takes the form of reinforcing rib (10) which in turn takes the form of a straight cut (11) vertical to the central longitudinal axis (12) of the assembly rail (6) and of a curved shaping ofthe area of material adjacent to cut (11).

4. An under-part in accordance with Claims 1 to 3, characterised in that the reinforcing rib (10) is slightly longer on both sides of the central longitudinal axis (12) ofthe assembly rail (6) than the width (b) of the openings (8) stamped in the floor (2) for which the material for the brackets (7) comes.

## Revendications

1. Partie inférieure destinée à une gaine technique, en particulier à une gaine murale, constitué d'un profilé en tôle (1) ayant en coupe transversale la forme d'un C, à laquelle est rapporté un rail de montage (6), s'étendant sur toute la longueur du profilé, ayant un profil en C, destiné à fixer des appareils d'installation à la face intérieure de la paroi de fond (2), caractérisée en ce que le rail de montage (8) est constitué d'éclisses (7), opposées l'une à l'autre par paires, en forme de bandes et découpées par segments dans la paroi de fond, éclisses dont chacune est déformée pour prendre la forme d'une branche du profil en C du rail de montage (6).

2. Partie inférieure selon la revendication 1, caractérisée en ce qu'entre les segments contenant les éclisses (7), on prévoit une traverse de liaison (9), courant transversalement aux grands côtés des éclisses, et comportant un renforcement (10).

3. Partie inférieure selon la revendication 2, caractérisée en ce que le renforcement est formé par une nervure de renforcement (10), qui est formée à partir d'une coupe droite (11) perpendiculairement à l'axe longitudinal central (12) du rail de montage (6), et par une déformation en hotte de la zone de matière qui délimite la coupe (11).

4. Partie inférieure selon les revendications 1 à 3, caractérisée en ce que la nervure de renforcement (10) est, sur les deux côtés de l'axe longitudinal central (12) du rail de montage (10), réalisée un peu plus longue que la largeur (b) des ouvertures (8), découpées dans la paroi de fond (2), et dont provient la matière destinée aux éclisses (7).
